# EUROPEAN PATENT APPLICATION

(11) **EP 4 583 067 A1**
(43) Date of publication of application: **09.07.2025**
(21) Application number: 24150699.7
(22) Date of filing: 08.01.2024
(51) Int. Cl.: G06V 10/80, G06V 40/40

(54) **METHOD FOR DIFFERENTIATING A REAL OBJECT IN AN IMAGE FROM A SPOOF OF THE REAL OBJECT**

(71) Applicant: Identy Inc., Dover, DE 19901 (US)
(72) Inventor: Gupta, Hardik, Dover, 19901 (US); Vaquero, Carlos, Dover, 19901 (US)
(74) Representative: Grünecker Patent- und Rechtsanwälte PartG mbB

(57) **Abstract**

Method for differentiating a real object in an image from a spoof of the real object, the method comprising, obtaining an image comprising at least one object, wherein the object comprises at least one biometric identifier, such as a finger, a fingerprint, a face or a palm; extracting three-dimensional information and semantic information from the image, wherein the semantic information relates the at least one object in the image to the at least one biometric identifier and/or relates different objects in the image to each other; merging the extracted three-dimensional and semantic information to a combined information; processing the combined information by a classifier; outputting by the classifier a data set which indicates whether the at least one object in the image is the real object or a spoof of the real object.

## Description

The present invention relates to a method for differentiating a real object in an image from a spoof of the real object according to independent claim 1 and a computing device according to independent claim 14, which implements this method.

### Prior Art

In the prior art, systems are known that employ 3D information to perform anti-spoofing detection in order to enable secure face recognition of a user. Most systems in the prior art, however, require complex and expensive hardware, such as multiple dedicated camera systems.

Even though also systems are known that only employ a single camera to generate a 3D model of a face, such systems either require collaboration of the user, in order to scan the face of the user from different angles, or a complex camera system, such as a 3D camera.

In addition, the systems known in the prior art only rely on a single type of information, i.e. the three-dimensional information of the face or other biometric features, when performing anti-spoofing detection. As these systems only employ a single type of information for spoof detection, they are prone to certain types of spoof attacks and often cannot distinguish a real object in an image from a spoof of the real object with the desired accuracy and reliability.

### Objective

Based on the known prior art, the objective of the present invention is to provide a method for differentiating a real object in an image from a spoof of the real object, whereby the method enables reliable spoof detection.

### Solution

This problem is solved by the method for differentiating a real object in an image from a spoof of the real object according to independent claim 1 and the computing device comprising a processor, an image sensor and a storage device according to independent claim 14. Preferred embodiments of the invention are provided in the dependent claims.

The method for differentiating a real object in an image from a spoof of the real object according to the invention comprises obtaining an image comprising at least one object, wherein the object comprises at least one biometric identifier, such as a finger, a fingerprint, a face or a palm, extracting three-dimensional information and semantic information from the image, wherein the semantic information relates the at least one object in the image to the at least one biometric identifier and/or relates different objects in the image to each other, merging the extracted three-dimensional and semantic information to a combined information, processing the combined information by a classifier and outputting by the classifier a data set which indicates whether the at least one object in the image is the real object or a spoof of the real object.

The image can, for instance, be a still image of a scene, a set of still images of the scene or a video capturing the scene.

The spoof of the real object can correspond to any replica of the real object that is being placed instead of the real object in a scene that is being captured by the image being obtained by the method. The spoof of the real object is not limited according to the invention but can, for instance, be a two-dimensional picture of the real object, which can be printed on paper or any other material. The two-dimensional picture of the real object can, for instance, comprise a biometric identifier comprising a fingerprint, a finger or a palm of a user or also comprise any other biometric identifier, such as a face or an eye of a user. Alternatively, the spoof of the real object can also be a digital photo or a video of the real object, which can be shown on a screen of a computing device or a digital display device. Furthermore, the spoof of the real object can also be a three-dimensional replica of the real object, which can, for instance, replicate a biometric identifier of a user and correspond to a facemask, a replica of a finger, a replica of a fingertip or any other biometric identifier. The above listed types of spoofs of the real object shall only be considered as examples and the spoof of the real object can also correspond to any other replica of the real object, which is not explicitly mentioned here.

The three-dimensional information can comprise a distance between a particular surface point of an object of a scene that is being captured by the image and a reference point at the time the image of the scene has been recorded. The reference point can, for instance, be the image sensor by which the image of the scene has been recorded. The three-dimensional information can furthermore specify, for a particular surface point of the object in the scene, which is recorded by a specific pixel of the image sensor and therefore captured by a specific pixel of the recorded image, the distance between the specific surface point of the object of the scene and the specific pixel of the image sensor at the time the image of the scene has been recorded.

The invention is, however, not limited to this specific embodiment of three-dimensional information but can, for example also employ light reflection characteristics of the object. These change depending on whether the object is a real three-dimensional object or a spoof of the real object (like a two-dimensional surface showing an image of the object).

Extraction of the three-dimensional information can, for instance, be realized by using intensity data of the image. More specifically, the intensity data assigned to each pixel of the image can be used for extracting the three-dimensional information. With this approach, the three-dimensional information can even be extracted from an image that has been recorded by a conventional 2D image sensor. When the image has been obtained by a stereo image sensor, comprising two image sensors by means of which a scene can be captured from slightly varying angles, the three-dimensional information can be extracted based on the two images obtained by the stereo image sensor. In case the obtained image has been originally taken by a 3D camera, such as time of flight camera or an optical coherence tomograph, the three-dimensional information can already be comprised in the desired format in the obtained image and the extraction process of the three-dimensional information can therefore be simplified as compared to the two other approaches discussed above.

Semantic information is to be understood as information that gives meaning to the at least one object in the image and/or that relates different objects in the image with each other. In case the image comprises, for instance, a biometric identifier, such as a fingertip of a user, the semantic information can categorize the object of the image that corresponds to a fingertip as a fingertip. More specifically, the semantic information can, for instance, categorize certain pixels of the image as a fingertip (or more generally the object) or can assign probability values to certain pixels of the image corresponding to a fingertip. In case the image comprises, for instance, two hands that are connected with a body of the user, the semantic information can furthermore categorize the two objects in the image that correspond to the hands as hands and the object that corresponds to the body as a body and, as the hands are connected to the body, furthermore associate the two hands with the body. On the other hand, in case the image shows, for instance, a first hand connected to a first body and a second hand connected to a second body, the semantic information can, for instance, categorize the object corresponding to the first hand as a first hand and the object corresponding to a second hand as a second hand, and furthermore specify that the first and the second hand belong to different bodies.

The classifier can be a deterministic or a non-deterministic classifier.

With the method according to the invention, a real object in an image can be reliably distinguished from a spoof of the real object in the image. By merging three-dimensional information with semantic information to combined information and processing the combined information instead of a single type of information, such as three-dimensional information, the reliability of spoof detection in images can be significantly enhanced. This is because it is only in the case of a real object that the semantic and the three-dimensional information extracted from the image are aligned with respect to each other. The method according to the invention can be of particular relevance for granting access to security relevant applications or data, where access is typically secured by a biometric identifier and where it is crucial to identify whether the biometric identifier is real or a spoof. As the method does not require complex hardware, it can also be employed on conventional computing devices, such as mobile computing devices, and be made available to a larger number of users.

In one embodiment, the image is obtained by at least one image sensor of a computing device, such as a mobile computing device. By obtaining the image by the at least one image sensor of the computing device, it can be ensured that the image is obtained in its original form and subsequent changes or modifications to the image can be prevented.

It can be provided that the image sensor comprises a 2D image sensor and/or a 3D image sensor. In case the image is obtained by a 2D image sensor, the method can be carried out on any conventional computing device having a conventional image sensor, such as a mobile computing device, like a tablet or a smartphone. By using a 3D image sensor, depth information can already be determined by the image sensor itself and the process of extracting the three-dimensional information from the image can be carried out more efficiently. In case both a 3D image sensor and 2D image sensor are provided, the depth information extracted from the images obtained by both sensors can be employed and the accuracy of extracted depth information and therefore also the accuracy of the method can be further improved.

In one embodiment, extracting the three-dimensional information comprises creating a depth map of the image. By creating a depth map, the three-dimensional information of a scene that is being captured by the image can be extracted in a reliable and storage efficient way and be provided in a format that can be readily processed by the classifier.

The depth map can, for instance, comprise depth values, which specify a distance between objects of the scene captured by the image and a reference point, such as the image sensor by which the image has been recorded or any other reference point, at the time the image has been recorded.

The depth map can have the same resolution, i.e. the same number of pixels, as the obtained image. In this case, each pixel of the obtained image can be associated with a depth value. Alternatively, the depth map can also have a different resolution as the obtained image. For instance, the depth map can also assign a depth value to a group of pixels of the obtained image, such as 4 pixels, 16 pixels, 32 pixels or any other number of pixels of the obtained image. With this, the size of the depth map can be reduced, which can be of particular relevance when processing large amounts of data. The depth map can, for instance, be represented by a matrix or a higher rank tensor, i.e. a tensor with a rank higher than three.

It can further be provided that extracting the semantic information comprises detecting and segmenting the at least one biometric identifier in the image and creating a probability map for each type of biometric identifier. By creating a probability map, the semantic information can be extracted in a storage efficient way and provided in a format that can be readily combined with the three-dimensional information and processed by the classifier.

The probability map can have the same or a different resolution as the obtained image. It is, for instance, conceivable that in a probability map for a certain biometric identifier, a probability value of a pixel corresponding to the certain biometric identifier is only assigned to a group of different pixels of the obtained image, such as 4 pixels, 16 pixels, 32 pixels or any other number of pixels in order to reduce the size of the probability map. The probability map can, for instance, be represented by a matrix or a higher rank tensor, i.e. a tensor with a rank higher than three.

In one embodiment, the method further comprises extracting additional information, comprising texture based, motion based, color based and/or reflection based information, from the image and combining the additional information with the three-dimensional information and semantic information to the combined information. By extracting additional information from the image and merging the additional information with the three-dimensional and the semantic information, the reliability of the method can be further increased.

It can also be provided that the information extracted from the image is combined by stacking the information into a tensor having at least one channel. By stacking the information into a tensor with at least one channel, the information can be grouped and transformed into a format that can be readily and more efficiently processed by the classifier.

The number of channels of the tensor can correlate with the number and the format of the extracted information that are being stacked together. The tensor can, for instance, comprise two channels, i.e. a tensor of rank 3, when three-dimensional information and semantic information is stacked together and three-dimensional and semantic information is each represented by a matrix. However, in case the three-dimensional and semantic information is each also represented as a tensor having at least two channels, the channels of the stacked tensor can correspond to the sum of the channels of each of the tensors representing the three-dimensional information and the semantic information. The tensor representing the combined information can have the same resolution, i.e. the same number of pixels, or a different resolution, i.e. a different number of pixels, as the obtained image.

In one embodiment, the information extracted from the image is combined by mapping the extracted information into a single or multiple embeddings. By transforming the information extracted from the image into a low dimensional representation, such as a vector representation, the dimensionality of the extracted information can be reduced and processed more efficiently by the classifier.

It can further be provided that combining the information extracted from the image is performed before providing the extracted information to the classifier or wherein combining the information extracted from the image is performed by the classifier. With this, the combination of the extracted information can be flexibly performed either by the classifier or another entity of the method. Furthermore, it can be flexibly decided based on the characteristics of the employed classifier as to whether the merging of the extracted information is to be performed by the classifier or the other entity.

In one embodiment, the data set comprises at least one score, relating to a probability of the at least one object in the image corresponding to a real object or a spoof of the real object, or wherein the data set comprises binary hard decision data on whether the at least one object in the image is a real object or a spoof of the real object. The score can, for instance, constitute a probability value or be a value that only relates to but does not necessarily constitute a probability value, such as an output of a support vector machine. By providing the at least one score, a user or another entity, such as a device on which the method is performed, can flexibly decide, for instance by comparing the provided score to a reference value, as to whether the at least one object in the image corresponds to a real object or a spoof of the real object. In case the data set comprises binary hard decision data, the method provides a clear decision, i.e. a binary value of 0 or 1, which simplifies the decision making process for a user or another entity.

It can be provided that in case the data set comprises at least one score, the at least one score relates to a probability that the spoof of the real object is a certain type of spoof or, wherein the data set comprises hard decision data, the data set furthermore comprises details about the type of spoof. With this, the data set does not only provide information specifying whether the object corresponds to a real object or a spoof of the real object but also further characterizes the type of spoof. This can be of particular relevance when further information about the type of spoof, for instance for analysis purposes, is required.

In one embodiment, the classifier comprises a machine learning classifier, such as a neural network, a Gaussian mixture modelling algorithm, a Bayesian Network, a support vector machine algorithm or a linear algorithm. Machine learning classifiers are particularly suited for pattern recognition and therefore specifically qualify for processing the combined information and deriving thereof the data set, indicating whether the at least one object in the image is the real object or a spoof of the real object.

In one embodiment, each step of the method is carried out on a mobile device. In this case, the method can comprise efficient and small footprint components, which allow the method to run locally on a mobile computing device. Performing the method directly on a mobile computing device can increase the security of the method, as no security relevant or user specific data needs to be exchanged between the mobile computing device and an external server.

According to the invention, furthermore, a computing device comprising a processor, an image sensor and a storage device is provided, wherein computer readable instructions are stored on the storage device, which when executed cause the computing device to perform the method according to the above described embodiments.

The computing device according to the invention allows to reliably distinguish a real object in an image from a spoof of the real object in the image, which can be of particular relevance when granting access to security relevant applications or data on the device, where access is typically secured by a biometric identifier and where it is crucial to identify whether the biometric identifier is real or a spoof.

### Brief description of the drawings

- Fig. 1: Flow chart of a method for differentiating a real object in an image from a spoof of the real object according to an embodiment
- Fig. 2: Flow chart further specifying the outputting of the data set by the classifier according to different embodiments
- Fig. 3: Mobile computing device adapted for differentiating a real object in an image from a spoof of the real object according to an embodiment

### Detailed description of the drawings

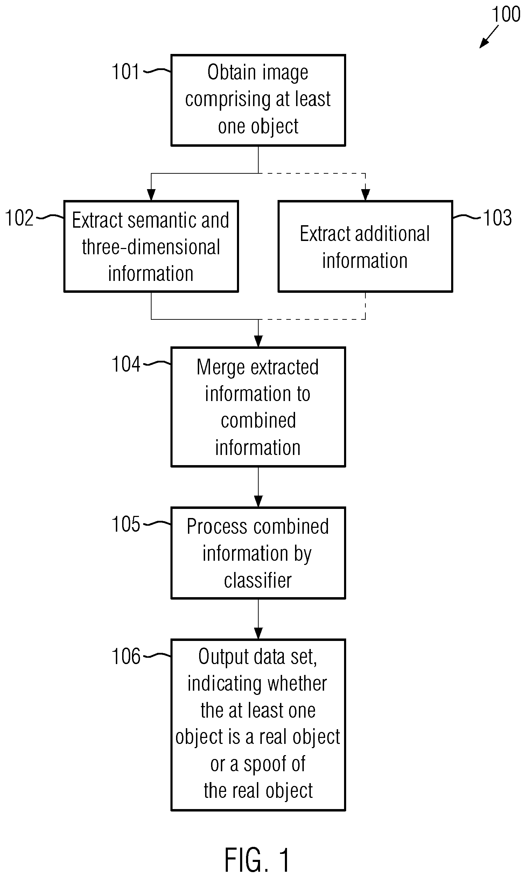

Fig. 1 shows a flow chart 100 of a method for differentiating a real object in an image from a spoof of the real object in the image according to an embodiment.

In step 101, an image comprising at least one object comprising at least one biometric identifier, such as a finger, a fingerprint or a palm is obtained by the method. The types of biometric identifiers just mentioned are exemplary. The object can also comprise any other biometric identifier, such as a face, an eye or a retina or any other biometric characteristic that is preferably unique to a human and therefore qualifies as a means to accurately identify a person.

The obtained image can be a still image of a scene, a set of still images of the scene or a video of the scene. Consequently, the method can also obtain a variety of images, such as 2, 10, 50 or any other number of images.

The image can, for instance, be obtained from an image sensor of a computing device such as a mobile computing device. The image sensor can be a 2D and/or a 3D image sensor.

The 2D sensor can be a conventional image sensor, such as a CCD or CMOS sensor, as used in conventional digital camera systems or in conventional mobile computing devices.

The 3D image sensor, on the other hand, can, for instance, comprise two 2D image sensors, which are arranged at a certain distance from each other and are each adapted to capture an image of the scene from a slightly different perspective. Such image sensor is also known as stereo image sensor.

Alternatively, the 3D image sensor can also be a time of flight (ToF) image sensor, such as a light detection and ranging sensor, an optical coherence tomograph or any other image sensor adapted to record a three-dimensional image of a scene.

Optionally, it can, for instance, also be provided that the method obtains a first image from a 2D image sensor and second image from a 3D image sensor, whereby the 2D image and the 3D image capture the same scene. With this, it can be provided that a first set of three-dimensional and semantic information is extracted from the image obtained from the 2D image sensor and a second set of three-dimensional and semantic information is extracted from the image obtained from the 3D image sensor. In this case, it can either be provided that the information extracted from both the image obtained by the 2D and 3D image sensor is used by the method or that the extracted information from the image obtained by the 2D image sensor and the extracted information from the image obtained by the 3D image sensor is compared regarding quality and only the extracted information, which has higher quality, is being used by the method. With this, the reliability of the method can be further improved, as even in case one of the image sensors by which an image has been obtained was, for instance, contaminated or faulty at the time the image has been recorded and the extracted information is therefore not usable or reliable.

In an embodiment, it can be provided that the method is being performed on a computing device or mobile computing device comprising at least one image sensor by which the image has been obtained. The method can, however, also be performed on any other device which is different from the device from which the image has been obtained. For instance, the image can also be obtained from a multimedia device, such as a flash drive, which does not comprise an image sensor and only serves as an intermediary storage device for the image or from a computing device comprising an image sensor which is, however, different from the computing device on which the method is performed.

Next, in step 102, the three-dimensional information and semantic information is extracted from the obtained image, whereby the semantic information relates the at least one object in the image to the at least one biometric identifier and/or relates different objects in the image to each other.

The three-dimensional information can, for example, specify a distance between a particular surface point of an object of a scene that is being captured by the obtained image and a reference point, at the time the image of the scene has been recorded. The reference point can, for instance, be the image sensor by which the image of the scene has been recorded or any other reference point.

In case the reference point corresponds to the image sensor, the three-dimensional information can specify for a particular surface point of an object in the scene, which is recorded by a specific pixel of the image sensor and therefore captured by a specific pixel of the obtained image, the distance between the specific surface point of the object of the scene and the specific pixel of the image sensor at the time the image of the scene has been recorded. Alternatively, the reference point can, for instance, also correspond to a surface point of an object of the scene that is closest to the image sensor. The just mentioned reference points are exemplary and the reference point can also be any other reference point set later as part of a mean distance surface that is obtained by determining the mean distance of all objects in the scene to the image sensor.

The semantic information, on the other hand, is to be understood as information that gives meaning to the at least one object in the image and/or that relates different objects in the image with each other. In case the image comprises, for instance, a biometric identifier, such as a fingertip of a user, the semantic information can categorize the object of the image that corresponds to a fingertip as a fingertip. More specifically, the semantic information can also categorize certain pixels of the image as a fingertip or can assign a probability value to certain pixels of the image to correspond to a fingertip. In case the image comprises, for instance, two hands that are connected with a body of the user, the semantic information can categorize the two objects in the image that correspond to the hands as hands and the object that corresponds to the body as a body and, as the hands are connected to the body, furthermore associate the two hands with the body. On the other hand, in case the image shows, for instance, a first hand connected to a first body and a second hand connected to a second body, the semantic information can, for instance, categorize the object corresponding to the first hand as a first hand and the object corresponding to a second hand as a second hand, and furthermore specify that the first and the second hand belong to different bodies.

In an embodiment, it can be provided that extracting the three-dimensional information comprises creating a depth map of the image.

The depth map can, for instance, be created by means of a depth extraction model employing machine learning. The depth extraction model can, for instance, be a neural network and more specifically a deep neural network.

The depth extraction model can be a trained model. The model can, for instance, be trained by a number of 2D images, where each pixel of the 2D image has been assigned with a respective depth value and an intensity value. The model can also be trained with sets of 2D images that have been obtained by a stereo image sensor, whereby each pixel of each of the images has been assigned to a respective depth value.

In an embodiment, the depth extraction model can be a DenseDepth model.

The depth map can, however, also be created by using a deterministic algorithm.

The depth map can, for instance, comprise depth values between objects of the scene captured by the image and a reference point, such as the image sensor by which the image has been recorded or any other reference point.

The depth map can, for instance, associate each pixel of the obtained image with a depth value, whereby for a specific pixel of the image, the depth value can correspond to a distance between a surface point of an object of the scene and a pixel of the image sensor, by which the light reflected by the surface point of the object has been detected at the time the image has been recorded. The distance value associated with each pixel can, however, also be a relative distance value, such as a normalized distance value, or any other distance value.

In case the image is an image recorded by a conventional 2D image sensor, the depth map and the depth values can, for instance, be created based on intensity data of the image and specifically based on intensity data assigned to each pixel of the image.

As the intensity of the light that is being reflected from an object decreases with distance, the intensity with which the reflected light is being detected by the different pixels of the image sensor and therefore also the intensity associated with each pixel of the image recorded by the image sensor is a suitable means for deriving for each pixel of the image the distance value of a particular surface point of the object to the pixel of the image sensor by which the light reflected by this particular surface point of the object was detected at the time the image was taken. To derive the distance from the intensity, the method can, for instance make use of the inverse quadratic proportionality between the intensity of light *l* and the distance rtravelled by the light / *~* 1/*r*².

By evaluating the intensity of each pixel of the image, it is therefore possible to assign to each pixel of the image a depth value and to create a depth map for the scene captured by the image. With this, three-dimensional information about the objects located in the scene, such as, for instance, a biometric identifier, can even be obtained from an image that has been captured by a 2D image sensor.

In case the obtained image is an image that has been recorded by a stereo image sensor, the depth map can, for instance, be extracted by comparing the two images, namely a first and a second image, obtained from slightly different angles of the scene with each other. The depth map can specifically be derived by calculating spacings between a pixel or a group of pixels of the first and the second image that contain the same information, i.e. capture the same surface point of an object of scene. Based on the calculated distances, a depth map can be generated. The depth map can thereby comprise relative depth values that relate each surface point of an object of the scene, i.e. the surface point of the object captured by a pixel of the images, to a depth value. The depth value can thereby specify a relative distance between the respective surface point and a reference point, whereby the reference point can correspond to the surface point of an object captured by the two images that was closest to the image sensor at the time the images were recorded.

Furthermore, in case the obtained image is an image that has been recorded by a 3D image sensor, the three-dimensional information can already be comprised in the obtained image and the extraction process of the three-dimensional information can be performed more efficiently. As a 3D image, such as a 3D image obtained from a light detection and ranging sensor or an optical coherence tomograph, can in certain circumstances only be used to extract the three-dimensional information and not the semantic information, the method may obtain, in case a 3D image is obtained, an additional 2D image obtained by a 2D camera which captures the same scene as the image obtained by the 3D image sensor. This additional image can then be employed for extracting the semantic information.

The created depth map can have the same resolution as the obtained image or can have a different resolution than the obtained image. Instead of assigning a depth value to each pixel of the obtained image, it is, for instance, also conceivable that a depth value is only assigned to a group of pixels of the obtained image, such as 4 pixels, 16 pixels or 32 pixels or any other number of pixels of the obtained image. By grouping pixels, the size of the depth map can be efficiently reduced, which can be of particular relevance when processing large amounts of data.

The created depth map can, for instance, be a matrix or a tensor of rank 3 or higher, i.e. a tensor having at least two channels.

For extracting the semantic information from the obtained image, an image segmentation model can be employed. The image segmentation model can be adapted to identify objects of a certain category in the image and generate probability maps, wherein each probability map concerns a certain type of object of the category.

The image segmentation model can be a model using machine learning, such as a neural network or any other machine learning model. In a more specific embodiment, the image segmentation model can, for instance, be a deep learning model.

The image segmentation model can be a trained model which has been trained by images comprising objects of the certain category. Furthermore, the image segmentation model can be trained with images comprising objects of different categories.

Alternatively, the image segmentation model can also be a deterministic algorithm.

In an embodiment, the category can, for instance, correspond to biometric identifiers and extracting the semantic information can comprise detecting and segmenting the at least one biometric identifier in the image and creating a probability map for each type of biometric identifier.

The probability map can, for instance, have the same resolution as the obtained image. In this case, each pixel of the image can be assigned with a probability value of corresponding to a specific biometric identifier. For instance, in first probability map, each pixel can be assigned with a probability value of corresponding to a fingertip. In a second probability map, each pixel can be assigned with a probability value of corresponding to a palm. It can be conceivable that any other number of probability maps is generated, where each pixel is assigned with a probability value of corresponding to a certain biometric identifier.

Alternatively, the probability map can also have a different resolution than the obtained image. This can, for instance, be the case when a group of different pixels of the image, such as 4 pixels, 16 pixels or 32 pixels or any other number of pixels is assigned with a probability value? of corresponding to a certain body part. By grouping different pixels, the size of the created probability map can be reduced, which may be beneficial for the performance of the method in case a large amount of data is processed.

The depth map and the probability map can have the same resolution, i.e. the same number of pixels. In this way, the three-dimensional information and the semantic information can be easily merged to the combined information, as described in step 104 of the method. The resolution of the depth map and the probability map can be the same as the resolution of the obtained image. In this case, the depth map and the probability map can assign to each pixel of the obtained image a depth value and a probability value for the pixel corresponding to a particular biometric identifier, respectively.

The depth map and the probability map can, however, also have a different resolution. In this case, the resolution of the depth map or the resolution of the probability map can be adjusted before merging the three-dimensional and the semantic information to the combined information in step 104.

Optionally, in step 103, additional information comprising texture based, motion based, color based and/or reflection based information, can be extracted from the obtained image.

Extraction of the additional information can provide supplementary information to the three-dimensional and semantic information that can improve the reliability of the method for differentiating a real object in an image from a spoof of the real object in the image.

In step 104, the extracted three-dimensional information and semantic information is merged to combined information. In case also the optional additional information is extracted from the image, step 104 can also comprise merging the extracted three-dimensional, semantic and additional information to the combined information.

Merging the three-dimensional and the semantic information can, for instance, comprise that the three-dimensional information and the semantic information extracted from the image is combined by stacking the information into a tensor having at least one channel.

The tensor can have the same resolution as the obtained image or alternatively also have a different resolution as the obtained image. For stacking the three-dimensional and the semantic information into a tensor, the three-dimensional and the semantic information may be represented by a matrix or a tensor of same size. By a tensor of same size, it is meant that the tensors have the same number of rows and columns. The channels of the three-dimensional information tensor and the semantic information tensor may, however, differ from each other.

It is also conceivable that the three-dimensional information and semantic information matrix or tensor may have a different number of lines and columns. In this case, it can be provided that the matrix or tensor of smaller size is enlarged to match the size of the larger tensor, before the three-dimensional information and semantic information is stacked together. Enlarging the tensor of smaller size can for instance comprise including new rows and/or columns and interpolating data points between existing rows and columns in order to specify the three-dimensional and semantic information of the newly added rows and/or columns. Alternatively, it can also be conceivable that existing rows and/or columns of the tensor of larger size are summarized in order to reduce the size of the larger tensor.

In case the three-dimensional and semantic information is both represented as a matrix, the number of channels of the tensor can correspond to two. When each of the three-dimensional information and the semantic information is represented as higher rank tensors, the number of channels of the tensor that describes the combined information can correspond to the sum of the number of channels of the semantic information tensor and the three-dimensional information tensor.

The above applies accordingly when the semantic information and the three-dimensional information is additionally merged with the additional information.

Alternatively to stacking the extracted information into a tensor, it can also be provided that the extracted three-dimensional and semantic information is combined by mapping the extracted information into a single or multiple embeddings. In the optional case, where the additional information is also extracted from the image, the extracted three-dimensional information, semantic information and additional information can be combined accordingly by mapping the extracted information into a single or multiple embeddings.

As by means of the embedding the high dimensional information stored in the three-dimensional and semantic information can be expressed in a simplified lower dimensional representation, such as a vector representation, the dimensionality of the extracted information can be reduced and transformed into a format that can be processed more efficiently by the classifier.

After the three-dimensional information, the semantic information and the optional additional information has been merged to the combined information, the combined information can be provided to a classifier for processing of the combined information. In Fig. 1, this is described by step 105.

While it can be provided that the extracted information is only provided to the classifier once it has been merged to the combined information, it can alternatively also be provided that the classifier performs the merging of the three-dimensional, the semantic and the optional additional information to the combined information. In an embodiment, it can also be provided that the merging of the extracted information to the combined information is performed by a first classifier and the processing of the combined information is performed by a second classifier. The first and the second classifier can be same type of classifier or be alternatively also different types of classifiers.

The classifier can be a deterministic or a non-deterministic classifier.

In an embodiment, the classifier can, for instance, be a machine learning classifier. The machine learning classifier can be a neural network, a Gaussian mixture model, a Bayesian network, a support vector machine, a linear classifier, which can optionally include any dimensionality reduction as embedding extraction, a linear discriminant analysis, a principal component analysis or a probabilistic linear discriminant analysis.

The machine learning classifier can be a trained classifier which has been trained by combined information training data. The combined information training data can comprise merged three-dimensional data and semantic data for a variety of images, comprising images, where the at least one object in the image is the real object or a spoof of the real object. The machine learning classifier can furthermore be trained with combined information training data, where the image comprises more than one object and at least one object corresponds to a real object and at least one object corresponds to a spoof of the real object.

The classifier can, however, also be a non-deterministic algorithm.

The combined information is a particularly suitable means for differentiating whether the object in the image is a real image or a spoof of the real image. This is because only in case the object in the image is a real object is the three-dimensional information and the semantic information aligned with each other. Alignment of the three-dimensional information and the semantic information can mean that the semantic information associated with a certain pixel area of the image matches with the three-dimensional information associated with the respective pixel area. This specifically means that in case selected pixels of the obtained image are classified by the semantic information to correspond to a certain biometric identifier, the three-dimensional information derived for the selected pixels corresponds to three-dimensional information that are expected for the specific type of biometric identifier classified by the semantic information. In case the biometric identifier corresponds, for instance, to a fingertip, semantic information and three-dimensional information is only aligned when the pixels that are classified by the semantic information to correspond to a fingertip are also related by means of the three-dimensional information to a three-dimensional structure, which is indicative of a fingertip.

A case where the three-dimensional and semantic information is not aligned with respect to each other, can, for instance, be the case where selected pixels of the obtained image have been classified by the semantic information to correspond to a biometric identifier, such as a fingertip, and optionally pixels outside the fingertip are classified by the semantic information as background (not belonging to the fingertip) which is expected to have a greater distance to the camera than the fingertip, but the three-dimensional information associated with the selected pixels indicates a two-dimensional like depth profile, indicative of a piece of paper or a screen and/or indicate that the distance of the region classified as fingertip is more or less the same as the distance of the region classified as background. Such misalignment of semantic information and three-dimensional information provides clear evidence that the detected fingertip is a spoof of a real fingertip.

By combining semantic and three-dimensional information to combined information and processing the combined information by the classifier, the reliability of differentiating between a real object in an image and a spoof of the real object in the image can therefore be clearly enhanced.

After the combined information has been processed by the classifier, the classifier outputs in step 106 a data set which indicates whether the at least one object in the image is a real object or a spoof of the real object. The data set can, for instance, comprise a score that relates to a probability of the object in the image corresponding to a real object or a spoof of the real object or alternatively also comprise binary hard decision data. In the latter case, a value of 1 (or 0) can for example indicate a spoof whereas a value of 0 (or 1) can indicate a real object.

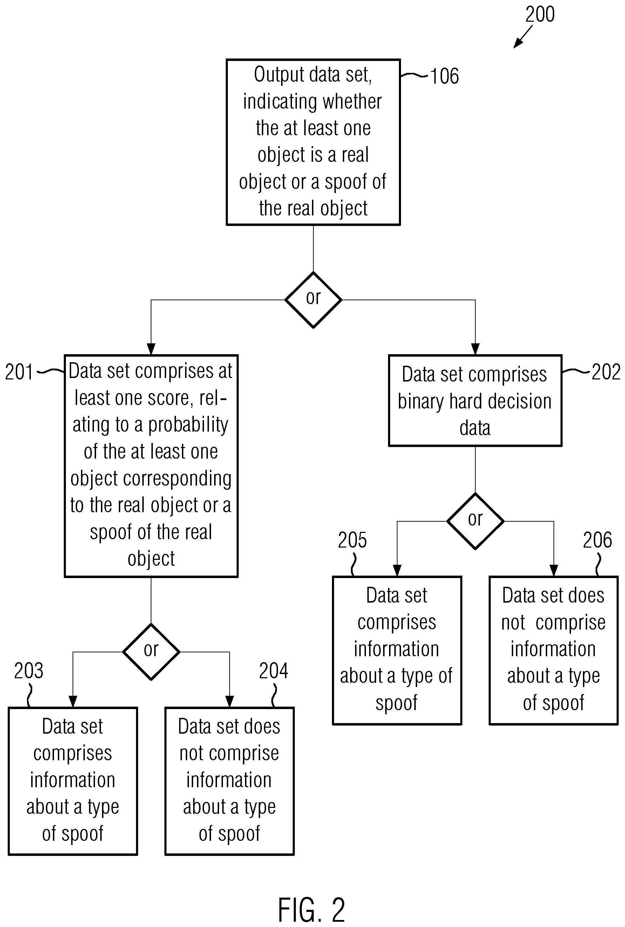

A selection of different data set outputs that can be provided by the classifier are discussed in the embodiment 200 detailed in the context of Fig. 2.

As indicated in Fig. 2, the data set output by the classifier 106, which indicates whether the at least one object is a real object or a spoof of the real object can, for instance, comprise at least one score relating to a probability of the at least one object corresponding to the real object or a spoof of the real object 201. By providing a score that relates to a probability, the decision as to whether the object is a real object or a spoof of the real object can, for instance, be left to a user or any other entity, such as a computing device on the which the method is being performed. The decision can then, for instance, be made by comparing a probability value or a value that only relates but does not constitute a probability, such as an output of a support vector machine, to a certain reference value, which may be flexibly set.

Alternatively, the data set can, however, also comprise binary hard decision data, which unambiguously indicates by means of a binary number, as to whether the at least one object is a real object or a spoof of the real object 202. In this case, it can, for instance, be provided that in case the classifier determines that the at least one object corresponds to a spoof of the real object, the classifier outputs a binary 1 and in case the classifier determines that the at least one object corresponds to the real object, the classifier outputs a binary 0. Alternatively, it can, however, also be provided that the classifier outputs a binary 0 in case of a real object and a binary 1 in case of a spoof of the real object. Outputting a binary number distinctly simplifies the decision making process, as the output unambiguously specifies as to whether the object is a real object or a spoof of the real object and no further processing of the output data by a user or any other entity is necessary.

In case the data set comprises at least one score relating to the probability that the at least one object corresponds to the real object or a spoof 201, the data set can furthermore comprise information about the type of spoof 203. In case a plurality of scores are provided, each score can, for instance, be related to a probability of the at least one object corresponding to a certain type of spoof. In case, for instance, the image comprises two objects and the data set output by the classifier comprises a first score indicating that the first object is with a first probability a spoof and the second object is with a second probability a spoof, the data set can further specify a type of spoof, such as a printed image, an image or video presented on a digital screen, a facemask or any other three-dimensional replica, for the first and second object. However, the first and the second score do not have to necessarily constitute a first and second probability value, but can also constitute a first and a second value that only relates to a first and a second probability, such as the output of a support vector machine. Further specifying the type of spoof can be of particular relevance when the spoof attack shall be analyzed more in detail.

Alternatively, it can also be provided that the data set comprising the score does not comprise information about the type of spoof 204. This can be the case when more detailed information about the type of spoof attack is not necessary. As often it is only of relevance whether the at least one object corresponds to a real object or a spoof of the real object, leaving out details about the type of spoof in the output data set can reduce the complexity of the output data and also reduce the memory footprint of the data set. Furthermore, the required processing is reduced, because only a binary decision or a probabilistic decision of whether or not there is a spoof is obtained.

Analogously, in case the data set comprises binary hard decision data, the data set can comprise information about the type of spoof 205 or alternatively not comprise information about the type of spoof 206.

In a further alternative embodiment, which is not explicitly shown in Fig. 2, it is also conceivable that the output data set comprises both a score relating to a probability of the at least one object corresponding to the real object or a spoof of the real object and binary hard decision data. In this case, a user or any other entity can flexibly decide as to whether to rely on the score relating to a probability or the binary hard decision data upon deciding as to whether the at least one object corresponds to the real object or to a spoof of the real object.

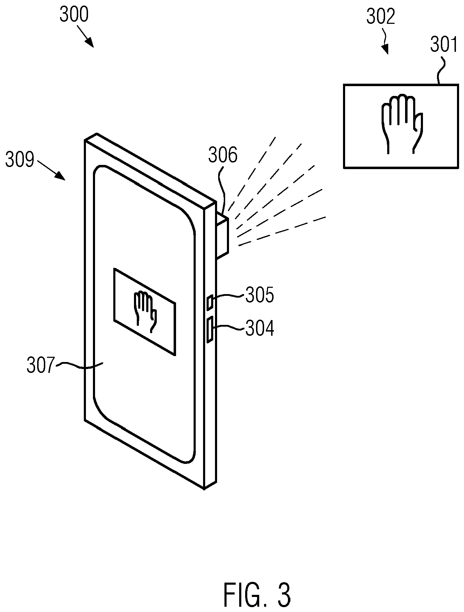

Fig. 3 shows a mobile computing device 309 having a processor 305, an image sensor 306, a storage device 304, as well as an optional screen 307. In the storage device 304 of the mobile computing device 309, computer readable instructions can be stored, which can cause the mobile computing device 309 to perform the methods 100 and 200 according to the embodiments discussed in the context of Fig. 1 and Fig. 2. The choice of a mobile computing device 309 in the embodiment discussed in Fig. 3 is to be understood exemplary. Instead of the mobile computing device 309, also any other computing device that is adapted to perform the method according to the embodiments of Fig. 1 and Fig. 2 can be provided.

As indicated in the embodiment 300 discussed in Fig. 3, the image sensor 306 of the mobile computing device 309 is directed towards a scene 302, which comprises a spoof 301 of a real object, i.e. a picture of a hand of a user printed on a piece of paper, and the mobile computing device 309 records an image of the scene 302.

The image recorded by the image sensor 306 and obtained by the mobile computing device 309 can, for instance, serve as a verification means for a user to obtain access to restricted applications or data stored on the mobile computing device 309.

After the image has been recorded by the image sensor 306, the computer readable instructions stored on the storage device of the mobile computing device can cause the processor of the mobile computing device to execute the method described in the context of Fig. 1 and extract three-dimensional and semantic information from the obtained image. The extracted information can then be merged to combined information, which is in turn processed by a classifier, stored, for instance, on the storage device 304 of the mobile computing device. After processing the combined information, the classifier can then output a data set indicating whether the obtained image comprises a real object or a spoof of the real object.

Based on the data set output by the classifier, the mobile computing device 309 can then either grant or deny access to the restricted applications and/or the data stored on the mobile computing device 309. To do so, the mobile computing device can, for instance, proceed in accordance with the embodiments discussed in the context of Fig. 2 and either decide based on hard decision data or a score to grant or deny access. In case the classifier does not output a binary hard decision data, but a score relating to a probability, the mobile computing device can be adapted to compare the score with a reference value or a number of reference values, which can be saved on the storage device 304 and make based on the comparison a decision as to whether the object in the image corresponds to a real object or a spoof of the real object. In case the data set output by the classifier furthermore provides information about the type of spoof, the mobile computing device can be adapted to transfer the data to a server, where a potential spoof attack can be recorded.

As, in the case of the embodiment discussed in the context of Fig. 3, the obtained image comprises a spoof of the real object 301, the mobile computing device denies access to the restricted applications and/or data and prevents a possible misuse of data.

## Claims

1. Method for differentiating a real object in an image from a spoof of the real object, the method comprising:
- obtaining an image comprising at least one object, wherein the object comprises at least one biometric identifier, such as a finger, a fingerprint, a face, or a palm;
- extracting three-dimensional information and semantic information from the image, wherein the semantic information relates the at least one object in the image to the at least one biometric identifier and/or relates different objects in the image to each other;
- merging the extracted three-dimensional and semantic information to a combined information;
- processing the combined information by a classifier;
- outputting by the classifier a data set which indicates whether the at least one object in the image is the real object or a spoof of the real object.

2. Method according to claim 1, wherein the image is obtained by at least one image sensor of a computing device, such as a mobile computing device.

3. Method according to claim 2, wherein the image sensor comprises a 2D image sensor and/or a 3D image sensor.

4. Method according to any of claims 1 to 3, wherein extracting the three-dimensional information comprises creating a depth map of the image.

5. Method according to any of claims 1 to 4, wherein extracting the semantic information comprises detecting and segmenting the at least one biometric identifier in the image and creating a probability map for each type of biometric identifier.

6. Method according to any of claims 1 to 5, wherein the method further comprises extracting additional information, comprising texture based, motion based, color based and/or reflection based information, from the image and combining the additional information with the three-dimensional and semantic information to the combined image.

7. Method according to any of claims 1 to 6, wherein the information extracted from the image is combined by stacking the information into a tensor having at least one channel.

8. Method according to any of claims 1 to 7, wherein the information extracted from the image is combined by mapping the information into a single or multiple embeddings.

9. Method according to any of claims 1 to 8, wherein combining the information extracted from the image is performed before providing the extracted information to the classifier or wherein combining the information extracted from the image is performed by the classifier.

10. Method according to any of claims 1 to 9, wherein the data set comprises at least one score, relating to a probability of the at least one object in the image corresponding to a real object or a spoof of the real object, or wherein the data set comprises binary hard decision data on whether the at least one object in the image is a real object or a spoof of the real object.

11. Method according to claim 10, wherein in case the data set comprises at least one score, the at least one score relates to a probability that the spoof of the real object is a certain type of spoof or, wherein the data set comprises hard decision data, the data set furthermore comprises details about the type of spoof.

12. Method according to any of claims 1 to 11, wherein the classifier comprises a machine learning classifier, such as a neural network, a Gaussian mixture modelling algorithm, a Bayesian Network, a support vector machine algorithm or a linear algorithm.

13. Method according to any of claims 1 to 12, wherein each step of the method is carried out on a mobile device.

14. Computing device comprising a processor, an image sensor and a storage device, wherein computer readable instructions are stored on the storage device, which when executed cause the computing device to perform the method according to any of claims 1 to 13.

## Amended claims

### Amended claims in accordance with Rule 137(2) EPC.

1. Method for differentiating a real object in an image from a spoof of the real object, the method comprising:
- obtaining an image comprising at least one object, wherein the object comprises at least one biometric identifier, such as a finger, a fingerprint, a face, or a palm;
- extracting three-dimensional information and semantic information from the image, wherein the semantic information relates the at least one object in the image to the at least one biometric identifier and/or relates different objects in the image to each other, wherein an image segmentation model is employed for extracting the semantic information from the obtained image, wherein the image segmentation model is adapted to identify objects of a certain category in the image and generate probability maps, wherein each probability map concerns a certain type of object of the category;
- merging the extracted three-dimensional and semantic information to a combined information;
- processing the combined information by a classifier;
- outputting by the classifier a data set which indicates whether the at least one object in the image is the real object or a spoof of the real object.

2. Method according to claim 1, wherein the image is obtained by at least one image sensor of a computing device, such as a mobile computing device.

3. Method according to claim 2, wherein the image sensor comprises a 2D image sensor and/or a 3D image sensor.

4. Method according to any of claims 1 to 3, wherein extracting the three-dimensional information comprises creating a depth map of the image.

5. Method according to any of claims 1 to 4, wherein extracting the semantic information comprises detecting and segmenting the at least one biometric identifier in the image and creating a probability map for each type of biometric identifier.

6. Method according to any of claims 1 to 5, wherein the method further comprises extracting additional information, comprising texture based, motion based, color based and/or reflection based information, from the image and combining the additional information with the three-dimensional and semantic information to the combined image.

7. Method according to any of claims 1 to 6, wherein the information extracted from the image is combined by stacking the information into a tensor having at least one channel.

8. Method according to any of claims 1 to 7, wherein the information extracted from the image is combined by mapping the information into a single or multiple embeddings.

9. Method according to any of claims 1 to 8, wherein combining the information extracted from the image is performed before providing the extracted information to the classifier or wherein combining the information extracted from the image is performed by the classifier.

10. Method according to any of claims 1 to 9, wherein the data set comprises at least one score, relating to a probability of the at least one object in the image corresponding to a real object or a spoof of the real object, or wherein the data set comprises binary hard decision data on whether the at least one object in the image is a real object or a spoof of the real object.

11. Method according to claim 10, wherein in case the data set comprises at least one score, the at least one score relates to a probability that the spoof of the real object is a certain type of spoof or, wherein the data set comprises hard decision data, the data set furthermore comprises details about the type of spoof.

12. Method according to any of claims 1 to 11, wherein the classifier comprises a machine learning classifier, such as a neural network, a Gaussian mixture modelling algorithm, a Bayesian Network, a support vector machine algorithm or a linear algorithm.

13. Method according to any of claims 1 to 12, wherein each step of the method is carried out on a mobile device.

14. Computing device comprising a processor, an image sensor and a storage device, wherein computer readable instructions are stored on the storage device, which when executed cause the computing device to perform the method according to any of claims 1 to 13.
